# EUROPEAN PATENT APPLICATION

(11) **EP 4 556 974 A1**
(43) Date of publication of application: **21.05.2025**
(21) Application number: 24212717.3
(22) Date of filing: 13.11.2024
(51) Int. Cl.: G02B 6/38, G02B 6/42

(54) **AN ALIGNMENT STRUCTURE AND METHOD FOR COPACKAGED OPTICAL CONNECTOR**

(30) Priority: 17.11.2023 US 202363600151 P; 10.04.2024 US 202418631617
(71) Applicant: Avago Technologies International Sales Pte. Limited, Singapore 768923 (SG)
(72) Inventor: Meadowcroft, David, Bury St Edmunds, Suffolk IP327FF (GB); Potluri, Hari, Milpitas, 95035 (US); Goh, Han Peng, 806634 Singapore (SG); Goon, Gary Fong Kem, 640732 Singapore (SG); Low, Heng Seng, 548325 Singapore (SG)
(74) Representative: Bosch Jehle Patentanwaltsgesellschaft mbH

(57) **Abstract**

An apparatus for aligning a fiber array unit (FAU) connector with a photonic integrated circuit (PIC) includes an aligner having a front section and a bottom section respectively joined with two side sections spaced apart by a first distance. The front section and the bottom section are partially removed to expand a semi-confined open space between the two side sections for receiving a shelf extended out beyond a lens at a side edge of a PIC chip. The shelf has an alignment feature associated with the lens. The front section is configured as a support bar positioned on a surface of the PIC chip. The semi-confined open space between the two side sections allows a body of the FAU connector to be loaded down from top to sit on the shelf in the semi-confined open space and be aligned with the lens through the alignment feature.

## Description

This application claims priority to U.S. Patent Application No. 63/600,151, filed on November 17, 2023, commonly assigned, and incorporated by reference herein to its entirety for all purposes.

The subject technology is directed to apparatus and method for aligning optical connectors with co-packaged optical system.

As data rates in optical communication system increase, there is a strong trend to move the high-speed electrical signals of a transceiver closer the switch module. This leads to the development and implementation of so-called co-packaged optical (CPO) system by mounting transceiver optics next to silicon-based channel switches. As the technology advances, these co-packaged optics need to be miniaturized by applications of silicon photonics integrated circuits (SPIC) technology. SPIC need to have light inputs and outputs. The input on the transmitter side is continuous wave (CW) light which is then modulated and sent into the output. The input on the receiver side is modulated light which is then converted into electrical signals.

The existing technology for inputting and receiving light from a silicon photonics integrated circuit is to actively align a fiber block through pigtailing and to glue it in place using epoxy. The issue with pigtailing a fiber optic cable is that the structure can become very unwieldly and hard to manage, especially for a CPO with switch chip which can have many hundreds of fibers for the inputs/outputs. Also, CPO switch ICs often need to be attached to another substrate via ball-grid array (BGA) technology, which requires the structure to undergo solder reflow at high temperatures that may damage the fiber optics cable coatings. The co-packaged optical system should have novel structure support with secure placements of miniature optical connectors on the inputs and outputs of the SPIC such as switch application specific integrated circuits on a photonic integrated circuit (PIC) chip, which become the subjects addressed in this disclosure.

According to an aspect, an alignment structure for optical components comprises:
an aligner comprising multiple sections joined together to provide a semi-confined open space configured to allow a body of a first optical component to be loaded into an alignment position to align with a second optical component, the multiple sections comprising:
a bottom section having a front edge facing a part of the semi-confined open space for receiving a shelf extended out of the second optical component;
a pair of side sections respectively joined with the bottom section and separated by a first width of the semi-confined open space to allow the body of the first optical component to be lowered from top; and
a front section joined with the pair of side sections, the front section being configured to be a support bar positioned on a surface of the second optical component while the shelf and a part of the second optical component are inserted under the support bar in the semi-confined open space and the shelf is used to support the body of the first optical component in the alignment position.

Advantageously, the pair of side sections comprise a top ridge near an outer wall of each side section and a sloped facet down from the top ridge to an inner wall of each side section, wherein the two inner walls of the pair of side sections are separated by the first width.

Advantageously, the sloped facet on each side section is configured to guide the body of the first optical component into the semi-confined open space until it sits onto the shelf, wherein the body of the first optical component has a width smaller than the first width.

Advantageously, each side section comprises an edge step in vertical direction relative to the bottom section, the edge step being located at a central region of the inner wall to increase the first width for a section of the semi-confined open space from the central region backward to allow a small amount of rotational freedom horizontally within the semi-confined open space for the body of the first optical component on the shelf to settle at the alignment position.

Advantageously, the pair of side sections comprises two first L-shaped end-sections joined with the front section, the two first L-shaped end-sections providing a stop for the body of the first optical component to keep a clearance gap from the first optical component in the alignment position to the second optical component.

Advantageously, the pair of side sections comprises two second L-shaped end-sections separated by a second width narrower than the first width yet sufficient to allow a ribbon fiber to pass out of the semi-confined open space from the body of the first optical component, and provide an extra amount of translational freedom horizontally within the semi-confined open space for the body of the first optical component on the shelf to align with the second optical component.

Advantageously, the aligner is configured to keep itself a clearance gap from both the body of the first optical component and the shelf when the body of the first optical component is in the alignment position on the shelf in the semi-confined open space.

Advantageously, the aligner is a single piece part for aligning a fiber array unit (FAU) connector with a lens at a side edge of a photonic integrated circuit (PIC) chip, the PIC chip having a package bottom from which the shelf is extended out.

Advantageously, the structure further comprises a support frame to provide respective surfaces for the aligner and the shelf to bond to and a clamshell lid to cover and hold the body of the FAU connector seating in the alignment position on the shelf by latching with the support frame, the support frame being in a floating state attached to a package structure of the PIC chip.

According to an aspect, an apparatus for aligning a fiber array unit (FAU) connector with a photonic integrated circuit (PIC) comprises:
an aligner having a front section, a rear section, and a bottom section respectively joined with two side sections spaced apart by a first distance, the front section and the bottom section being configured to expand a semi-confined open space between the two side sections for receiving a shelf extended out beyond a lens at a side edge of a PIC chip, the shelf having an alignment feature associated with the lens, the front section being configured as a support bar positioned on a surface of the PIC chip, the semi-confined open space between the two side sections allowing a body of the FAU connector to be loaded down from top to sit on the shelf in the semi-confined open space and be aligned with the lens through the alignment feature.

Advantageously, each of the two side sections comprises an inner side facing the semi-confined open space, an outer side opposite to the inner side, a narrow top ridge near the outer side and a sloped facet down from the top ridge to the inner side for guiding the body of the FAU connector down onto the shelf in the semi-confined open space between the two inner sides of the two side sections, the body of the FAU connector having a width equal to or smaller than the first distance.

Advantageously, the inner side comprises an edge step in vertical direction located at a central region of the side section, the edge step increasing the first distance to a second distance for a partial section of the semi-confined open space from the central region to the rear section to allow a small amount of rotational freedom horizontally within the semi-confined open space for the body of the FAU connector on the shelf to align with the lens at the side edge of the PIC chip.

Advantageously, the two side sections comprise two first L-shaped end-sections joined with the front section, the two first L-shaped end-sections providing hard stops for the body of the FAU connector to control a distance between a lens of the FAU connector and the lens at the side edge of the PIC chip.

Advantageously, the two side sections comprise two second L-shaped end-sections spaced apart by a third distance smaller than the first distance yet sufficient for passing a ribbon fiber of the FAU connector loaded on the shelf in the semi-confined open space.

Advantageously, the two second L-shaped end-sections are configured to provide extra amount of translational freedom horizontally within the semi-confined open space for the body of the FAU connector loaded on the shelf to align with the lens at the side edge of the PIC chip.

Advantageously, the alignment feature comprises a pair of V-grooves configured to be matched up by a pair of alignment rods disposed on the body of the FAU connector for establishing optical alignment between the lens of the FAU connector and the lens at the side edge of the PIC chip.

Advantageously, the shelf is part of a package structure attached to a bottom of the PIC chip by epoxy.

Advantageously, the apparatus further comprises a frame to provide respective support surfaces for the bottom section and the shelf to bond to, the frame being in a floating state attached to a package structure of the PIC chip.

Advantageously, the apparatus further comprises a clamshell lid coupled to the frame via a pivot pin, the clamshell lid being configured to lift open to allow the body of the FAU connector to be loaded onto the shelf in the semi-confined open space and close to hold the body of the FAU connector seating in the alignment position on the shelf by latching with the frame.

According to an aspect, a method for aligning a fiber array unit (FAU) connector with a photonic integrated circuit (PIC) comprises:
attaching a frame to a package structure of a PIC chip to provide support surfaces in a floating state, one of the support surfaces being configured to be bonded by epoxy to a pair of shelve each with an alignment feature respectively associated two lenses of the PIC chip;
placing a pair of aligners onto the frame, each aligner comprising a front section and a bottom section respectively joined with two side sections spaced apart by a first distance to provide a semi-confined open space configured to receive one of the pair of shelve as the front section positioned on a top surface of the PIC chip, one of the support surfaces of the frame being configured to be bonded by epoxy to the bottom section of each aligner;
loading a pair of bodies of two FAU connectors respectively onto the pair of shelve in the semi-confined open spaces of the pair of aligners, each body being provided with a small amount of rotational freedom horizontally in the corresponding semi-confined open space and translational freedom along a direction in parallel with the two side sections;
adjusting each body of FAU connector to an alignment position on the corresponding shelf via the alignment feature to achieve optical alignment between a lens of the FAU connector and one of the two lenses of the PIC chip;
curing the epoxy between each shelf and the corresponding one of the support surfaces to secure the shelf with the body of the FAU connector at the alignment position; and
curing the epoxy between each aligner and the corresponding one of the support surfaces of the frame to fix a position for the aligner to ensure a no-contact clearance between the body of the FAU connector and the aligner.

### BRIEF DESCRIPTION OF THE DRAWINGS

A further understanding of the nature and advantages of particular embodiments may be realized by reference to the remaining sections of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a perspective top view of the co-packaged optics photonic integrated circuits (CPO PIC) assembly with multiple fiber-array unit (FAU) connectors for optical inputs/outputs (IOs) according to an embodiment of the subject technology.
Figure 2 is a perspective view, top view, and side view of an aligner for aligning a FAU connector with a PIC chip according to an embodiment of the subject technology.
Figure 3 is a perspective view of both top and bottom of a body of FAU connector with alignment rods according to an embodiment of the subject technology.
Figure 4 is a perspective view of a configuration with an aligner being placed in a frame to receive a shelf extended from the PIC chip within the semi-confined open space and a same configuration next to it but with a FAU connector being loaded on the shelf according to an embodiment of the subject technology.
Figure 5 is a cross-sectional view showing a configuration with the body of FAU connector being guided via an aligner down to a shelf and a next configuration with the body of the FAU connector in an alignment position with the alignment rods matched to V-grooves in the shelf in a next aligner according to an embodiment of the subject technology.
Figure 6 is a top view showing a load position of the body of FAU connector in the semi-confined open space with hard stops at front and rear, a rotational freedom, and translational freedom for facilitating realization of alignment with the shelf according to an embodiment of the subject technology.
Figure 7 is a perspective view showing bodies of four (two pairs) of FAU connectors being loaded onto the shelve in the semi-confined open space provided by respective aligners supported by two (one pair) of frames with clamshell lids in opened positions according to an embodiment of the subject technology.
Figure 8 is a perspective view showing bodies of four (two pairs) of FAU connectors on the respective shelve with clamshell lids in closed positions according to an embodiment of the subject technology.
Figure 9 is a flow chart showing a method for aligning FAU connectors with a PIC chip according to another embodiment of the subject technology.

### DETAILED DESCRIPTION OF THE INVENTION

The present disclosure provides an alignment structure for optical components. The structure includes an aligner having multiple sections joined together to provide a semi-confined open space configured to allow a body of a first optical component to be inserted into an alignment position to align with a second optical component. The multiple sections comprise a bottom section, a pair of side sections respectively joined with the bottom section, and a front section joined with the pair of side sections. A part of the bottom section is removed to become a part of the semi-confined open space for receiving a shelf extended out of the second optical component. The pair of side sections is separated by a first width of the semi-confined open space to allow the body of the first optical component to be loaded from top. The front section is configured to be a support bar positioned on a surface of the second optical component while the shelf and a part of the second optical component are inserted under the support bar in the semi-confined open space to support the body of the first optical component in the alignment position. There are additional embodiments as well.

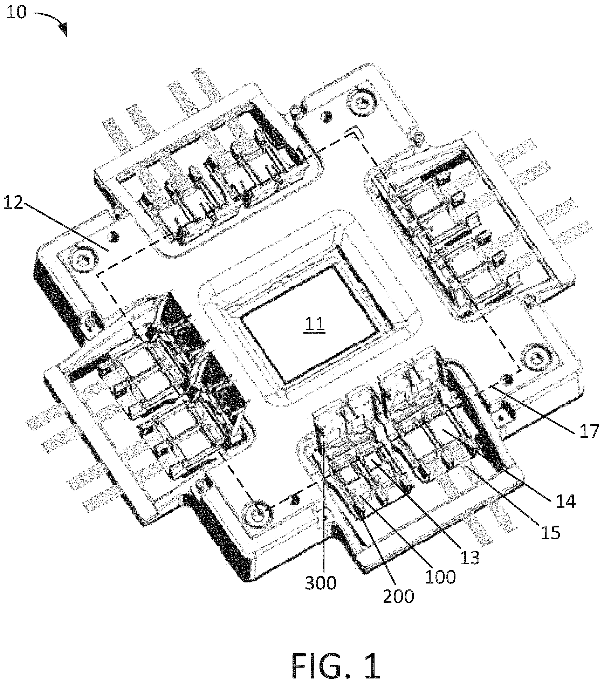

In an embodiment, the subject technology involves providing a solution of supporting alignment structure for an operator to insert and secure miniature optical fiber array unit (FAU) connectors with a co-packaged optics (CPO) - photonic integrated circuit (PIC) assembly. FIG. 1 shows a perspective top view of the CPO-PIC (10) assembly with maximum 16 FAU connectors (14) for optical Inputs/Outputs at four side edges of a PIC chip according to an embodiment of the subject technology. The package of the CPO-PIC assembly (10) includes a lid structure (12) fixed on a substrate where a switch module (11) is attached at center with optical Input/Output (IO) ports configured at respective four sides (indicated by the dashed line 17) of a PIC chip. The lid structure (12) is configured to place an alignment structure (100) to allow each of the 16 FAU connectors (14) being disposed at each edge of the respective sides (17) of the PIC chip (not visible below the lid structure (12) to establish light coupling with the IO ports of the CPO-PIC assembly (10). The FAU connector (14) comprises a small body followed by a ribbon fiber (15). The FAU connector body (14) is made of glass, translucent, quite delicate, very hard to handle and locate to achieve secure alignment with the PIC chip. The alignment structure (100) is provided as a solid piece part of optical connector for the CPO-PIC assembly (10). In particularly, the alignment structure (100) makes it possible for an operator to place the body of the FAU connector (e.g., by hand) into a position to establish micro-level alignments between a lens at front end of the body of the FAU connector and a lens associated with the IO ports of the PIC chip. The PIC chip is also a very small size and delicate. In an embodiment, the PIC chip has a shelf (13) extended out from each IO port at the side edge of the PIC chip. The shelf (13) contains an alignment feature (not visible from FIG. 1) that is configured to assist the alignment between the lens at front end of the body of the FAU connector and the lens associated with the IO ports of the PIC chip. The alignment structure (100) is configured to provide a cutout space to fit in the shelf (13) to allow the body of the FAU connector (14) to be attached onto the shelf and be secured at an alignment position using the alignment feature on the shelf (13).

The optical connector for the CPO-PIC assembly (10) also includes other piece parts to support the alignment structure (100). In an embodiment, the alignment structure (100) is configured to partially rest on a surface of the PIC chip and partially be supported by a bottom surface of a frame structure (200) which is attached to the lid structure (12) in a floating state. The "floating state" is referred to herein as a physical state of the frame structure relative to its environment which provides a partial attachment at a side of the frame structure free of any direct bottom support. The frame structure (200) also provides a bottom surface to support the shelf (13) in the floating state. The CPO-PIC assembly with multiple FAU connectors assisted by the alignment structure (100) must survive numerous quality tests including shock and vibration, unbiased damp heat, and fiber pulling tests. Throughout all these tests, the alignment structure (100) provided by the subject technology is configured to use a clamshell lid structure (300), which is coupled to the frame structure (200) via a pivotal pin to open or close, to apply a force from top to secure the body of FAU connector to stay on the alignment position relative to the PIC chip and have minimal change in optical input/output power.

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the present invention is not intended to be limited to the embodiments presented, but is to be accorded the widest scope consistent with the principles and novel features disclosed herein.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Similarly, when an element is referred to herein as being "bonded" to another element, it is to be understood that the elements can be directly bonded to the other element (without any intervening elements) or have intervening elements present between the bonded elements. In contrast, when an element is referred to as being "directly bonded" to another element, it should be understood that no intervening elements are present in the "direct" bond between the elements. However, the existence of direct bonding does not exclude other forms of bonding, in which intervening elements may be present. When a section or part of one piece of solid structure is referred to herein as being "joined" to another section or part of the same structure, it is to be understood that the section or part may be an undividable part of the one piece of solid structure just specifically named as to serve some unique functions comparing to other sections or parts. The one piece of solid structure may be machined or casted or 3D-printed as a whole piece. Alternatively, all sections or parts of the solid structure may be made (machined, casted, or printed) separately but connected as a single structure optionally by welding, soldering and blazing, mechanical fastening, adhesive bonding, press fitting, thermal bonding, or chemical bonding. The subject technology is focused to their functions individually or as a whole piece of the solid structure and should be applicable for any way of manufacturing.

Likewise, when an element is referred to herein as being a "layer," it is to be understood that the layer can be a single layer or include multiple layers. For example, a conductive layer may comprise multiple different conductive materials or multiple layers of different conductive materials, and a dielectric layer may comprise multiple dielectric materials or multiple layers of dielectric materials. When a layer is described as being coupled or connected to another layer, it is to be understood that the coupled or connected layers may include intervening elements present between the coupled or connected layers. In contrast, when a layer is referred to as being "directly" connected or coupled to another layer, it should be understood that no intervening elements are present between the layers. However, the existence of directly coupled or connected layers does not exclude other connections in which intervening elements may be present.

Moreover, the terms left, right, front, rear, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any section of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

One general aspect includes an alignment structure for optical components. The alignment structure also includes an aligner that may include multiple sections joined together to provide a semi-confined open space configured to allow a body of a first optical component to be inserted into an alignment position to align with a second optical component. The multiple sections may include a bottom section having a front edge facing the semi-confined open space for receiving a shelf extended out of the second optical component. The multiple sections also include a pair of side sections respectively joined with the bottom section and separated by a first distance of the semi-confined open space to allow the body of the first optical component to be lowered from top. The multiple sections also include a front section joined with the pair of side sections. The front section is configured to be a support bar positioned on a surface of the second optical component while the shelf and a part of the second optical component are inserted under the support bar in the semi-confined open space and the shelf is used to support the body of the first optical component in the alignment position.

Implementations may include one or more of the following features. The structure where the pair of side sections may include a top ridge near an outer wall of each side section and a sloped facet down from the top ridge to an inner wall of each side section, where the two inner walls of the pair of side sections are separated by the first distance. The sloped facet on each side section is configured to guide the body of the first optical component into the semi-confined open space until it sits onto the shelf, where the body of the first optical component has a width smaller than the first distance. Each side section may include an edge step in vertical direction relative to the bottom section. The edge step is located at a central region of the inner wall to increase the first distance to a second distance for a section of the semi-confined open space from the central region backward to allow a small amount of rotational freedom horizontally within the semi-confined open space for the body of the first optical component on the shelf to settle at the alignment position. The pair of side sections may include two first L-shaped end-sections joined with the front section, the two first L-shaped end-sections providing a stop for the body of the first optical component to keep a clearance gap from the first optical component in the alignment position to the second optical component. The pair of side sections may include two second L-shaped end-sections separated by a third distance smaller than the first distance yet sufficient to allow a ribbon fiber to pass out of the semi-confined open space from the body of the first optical component, and provide an extra amount of translational freedom horizontally within the semi-confined open space for the body of the first optical component on the shelf to align with the second optical component. The aligner is configured to keep itself a clearance gap from both the body of the first optical component and the shelf when the body of the first optical component is in the alignment position on the shelf in the semi-confined open space. The aligner is a single piece part for aligning a fiber array unit (FAU) connector with a lens at a side edge of a photonic integrated circuit (PIC) chip, the pic chip having a package bottom from which the shelf is extended out. The structure may include a support frame to provide respective surfaces for the aligner and the shelf to bond to and a clamshell lid to cover and hold the body of the FAU connector seating in the alignment position on the shelf by latching with the support frame, the support frame being in a floating state attached to a package structure of the PIC chip.

Another general aspect includes an apparatus for aligning a fiber array unit (FAU) connector with a photonic integrated circuit (PIC). The apparatus also includes an aligner having a front section and a bottom section respectively joined with two side sections spaced apart by a first distance. The front section and the bottom section are configured to expand a semi-confined open space between the two side sections for receiving a shelf extended out beyond a lens at a side edge of a PIC chip. The shelf has an alignment feature associated with the lens. The front section is configured as a support bar positioned on a surface of the PIC chip, the semi-confined open space between the two side sections allowing a body of the FAU connector to be loaded down from top to sit on the shelf in the semi-confined open space and be aligned with the lens through the alignment feature.

Implementations may include one or more of the following features. The apparatus where each of the two side sections may include an inner side facing the semi-confined open space, an outer side opposite to the inner side, a narrow top ridge near the outer side and a sloped facet down from the top ridge to the inner side for guiding the body of the FAU connector down onto the shelf in the semi-confined open space between the two inner sides of the two side sections, the body of the FAU connector having a width equal to or smaller than the first distance. The inner side may include an edge step in vertical direction located at a central region of the side section. The edge step increases the first distance to a second distance for a section of the semi-confined open space from the central region backward to allow a small amount of rotational freedom horizontally within the semi-confined open space for the body of the FAU connector on the shelf to align with the lens at the side edge of the PIC chip. The two side sections may include two first L-shaped end-sections joined with the front section. The two first L-shaped end-sections provide hard stops for the body of the FAU connector to control a distance between a lens of the FAU connector and the lens at the side edge of the PIC chip. The alignment feature may include a pair of V-grooves configured to be matched up by a pair of alignment rods disposed on the body of the FAU connector for establishing optical alignment between the lens of the FAU connector and the lens at the side edge of the PIC chip. The two side sections may include two second L-shaped end-sections spaced apart by a third distance smaller than the first distance yet sufficient for passing a ribbon fiber of the FAU connector loaded on the shelf in the semi-confined open space. The two second L-shaped end-sections are configured to provide extra amount of translational freedom horizontally within the semi-confined open space for the body of the FAU connector loaded on the shelf to align with the lens at the side edge of the PIC chip. The shelf is part of a package structure attached to a bottom of the PIC chip by epoxy. The apparatus may include a frame to provide respective support surfaces for the bottom section and the shelf to bond to. The frame is in a floating state attached to a package structure of the PIC chip. The apparatus may include a clamshell lid coupled to the frame via a pivot pin. The clamshell lid is configured to lift open to allow the body of the FAU connector to be loaded onto the shelf in the semi-confined open space and close to hold the body of the FAU connector seating in the alignment position on the shelf by latching with the frame.

Another general aspect includes a method for aligning a fiber array unit (FAU) connector with a photonic integrated circuit (PIC). The method also includes attaching a frame to a package structure of a PIC chip to provide support surfaces in a floating state. One of the support surfaces is configured to be bonded by epoxy to a pair of shelfs each with an alignment feature respectively associated two lenses of the PIC chip. The method also includes placing a pair of aligners onto the frame. Each aligner may include a front section and a bottom section respectively joined with two side sections spaced apart by a first distance to provide a semi-confined open space configured to receive one of the pair of shelve as the front section positioned on a top surface of the PIC chip. One of the support surfaces of the frame is configured to be bonded by epoxy to the bottom section of each aligner. The method also includes loading a pair of bodies of FAU connectors respectively onto the pair of shelve in the semi-confined open spaces of the pair of aligners. Each body is provided with a small amount of rotational freedom horizontally in the corresponding semi-confined open space and translational freedom along a direction in parallel with the two side sections. The method also includes adjusting each body of FAU connector to an alignment position on the corresponding shelf via the alignment feature to achieve optical alignment between a lens of the FAU connector and one of the two lenses of the PIC chip. The method also includes curing the epoxy between each shelf and the corresponding one of the support surfaces to secure the shelf with the body of FAU connector at the alignment position. The method also includes curing the epoxy between each aligner and the corresponding one of the support surfaces of the frame to fix a position for the aligner to ensure a no-contact clearance between the body of the FAU connector and the aligner.

As used herein, the phrase like "aligner", "frame", "shelf' refers to mechanical piece parts that have certain irregular shapes. Different sections of the irregular shapes respectively and cohesively are designed to serve different aspect of functions such as supporting, guiding, adjusting, limiting an optical component to align with another optical component. For example, the aligner may be made by molded plastic, or die-cast, machined, or a stamped sheet metal part. The frame may be made by machined nickel-plated copper tungsten, or metal injection molded cooper tungsten, or other strong material to absorb possible high external loads and materials with low coefficient of thermal expansion to match that of the photonic integrated circuit material. The shelf is referred as piece sticking out a wall (or something with a vertical side edge) and herein is a structure extended out of a side edge from a bottom of a package structure of a circuit chip. One preferred material may be glass, the same material for the connector body seated above for achieve secure and reliable optical alignment.

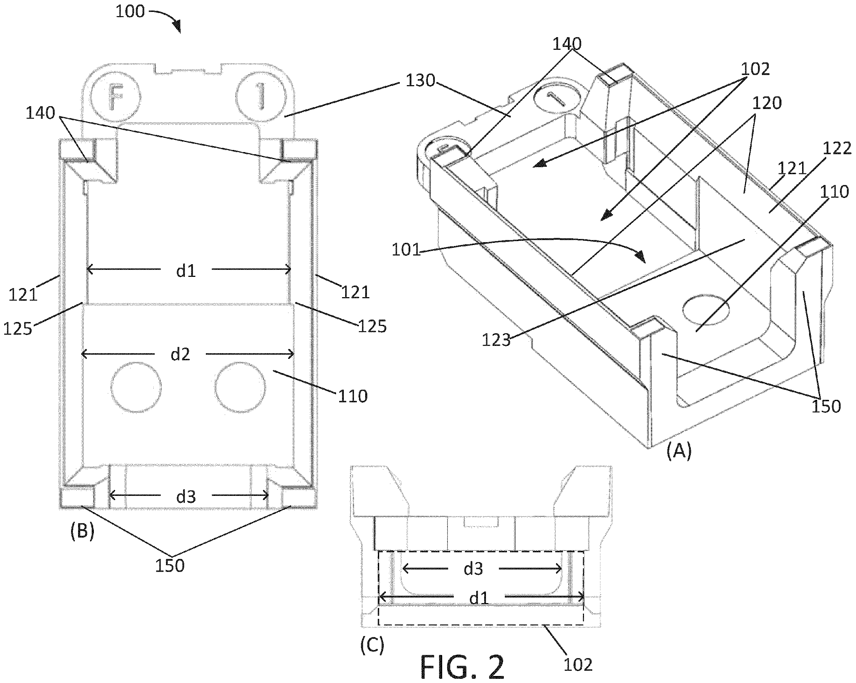

Figure 2 shows the alignment structure as a stand along piece part according to an embodiment of the subject technology. In the embodiment, the alignment structure 100, as shown in FIG. 2 (part A), includes a pair of side sections 120 spaced apart and joined with a bottom section 110 to provide a semi-confined open space 101 between two inner walls of the pair of side sections 120. Each side section 120 includes a first L-shaped end-section 140 joined with a front section 130. Part of the front section 130 and part of the bottom section 110 are removed to obtain a cutout space 111 that becomes a part of the semi-confined open space 101. This alignment structure 100, simply referred as an aligner in rest of the specification, is configured to have the front section 130 to act as a support bar placed at a side edge of a PIC chip while providing the cutout space 111 for receiving a shelf (13) extended out of the optical IO port of a PIC chip (see FIG. 1).

In an embodiment as shown in FIG. 2 (part B), a top view of the aligner 100 illustrates that a first distance d1 is provided for the semi-confined space between two inner walls of the pair of side sections 120. Each side section 120 has a narrowed top ridge region 121 near outer side wall of the side section 120. On the inner side, the top ridge region 121 is followed by a sloped facets 122 to join with the vertical inner wall of the side section 120, where the two inner walls are spaced apart by the first distance d1 to provide the semi-confined open space 101. The first distance d1 is at least wider by a small amount than the body of the FAU connector (14) to allow the latter to be loaded down (from top) into the semi-confined open space 101. On the central region of the inner wall 120, there is an edge step 125 in vertical direction down to the bottom section 110 to give a second distance d2 between the two inner walls from the central region towards the rear section before the two L-shaped end-sections 150. The second distance d2 is larger than the first distance d1 by a small amount. It is configured to provide some rotational freedom to the to-be-placed body of the FAU connector (14) inside the semi-confined open space 101. The two second L-shaped end-sections 150, which join respectively with the pair of the side sections 120 and commonly with the bottom section 110, provides a gap of a third distance d3 between the two second L-shaped end-sections 150 at the rear section of the aligner 100. The third distance d3 is smaller than the first distance d1 yet sufficiently wide to allow the ribbon fiber (15) to pass out of the semi-confined open space 101.

In an embodiment as shown in FIG. 2 (part C), a front side view of the aligner 100 illustrates that the front section acting as the support bar with a surface which is used to rest on a surface near side edge of the PIC chip. The dashed-line box represents proximally the cutout space 111, which allows the insertion of the shelf (13) when the aligner 100 is placed to the side edge of the PIC chip. This figure also clearly shows that the first distance d1 between two inner walls of the semi-confined open space 101 and the third distance d3 (d3 < d1) between two second L-shaped end-sections 150 at the backend section of aligner 100.

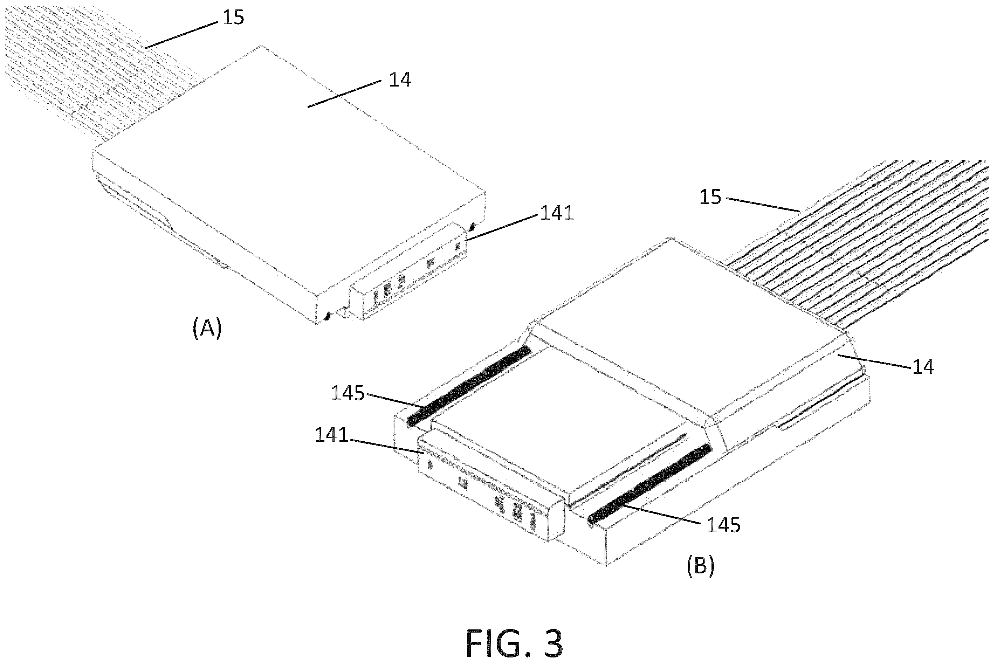

FIG. 3 shows a perspective view of the body of FAU connector that is used to make alignment with PIC chip to establish optical IOs via the alignment structure provided in this disclosure. Part A of FIG. 3 shows the top surface of the body of FAU connector 14 with one side being attached with a lens 141 (may include an array of micro-lenses) and another side being coupled to the ribbon fiber 15. Part B of FIG. 3 shows an alignment feature, two alignment rods 145 attached to respective V-grooves located in bottom surface near and in parallel to two sides of the body of FAU connector 14, associated with the present subject technology. As the body of FAU connector 14 is loaded, the alignment structure 100 is configured to guide the body of FAU connector 14 down to a top surface of the shelf (13). The top surface of the shelf (13) also includes two V-grooves configured to receive the two alignment rods. These V-grooves are alignment feature prebuilt in the shelf and the shelf, which is extended beyond respective side edge of the PIC chip (see FIG. 1) from a package structure below the PIC chip, is pre-aligned to the lens of optical IOs at the side edges of the PIC chip.

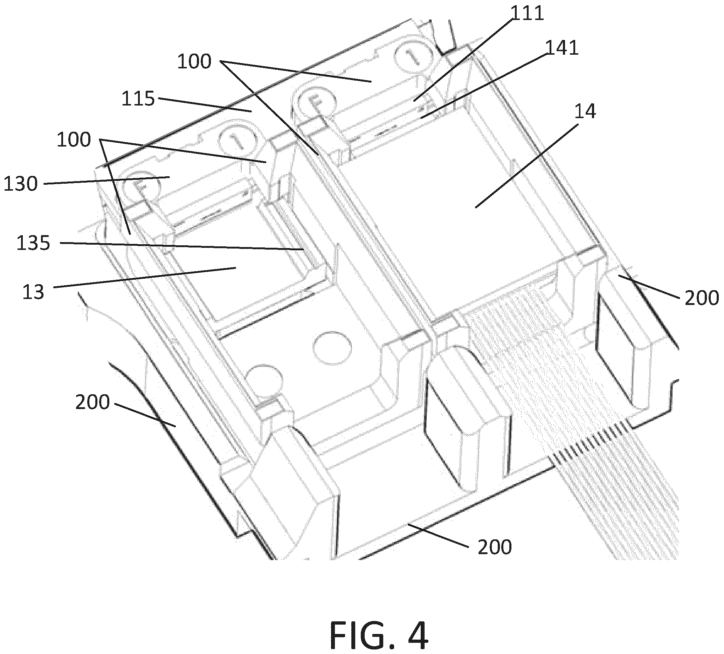

FIG. 4 is a perspective view of a configuration with an aligner being positioned and receiving a shelf 13 extended from the PIC chip within the semi-confined open space and a same configuration next to it but with a FAU connector 14 being placed on the shelf 13 through a same aligner according to an embodiment of the subject technology. In an embodiment, the aligner is a piece part of an optical connector for a photonic integrated circuit (PIC) chip, for example, a silicon photonics-based ICs with optical inputs/outputs co-packaged with electronical switch ICs. As shown, the aligner 100, which is substantially the same as the alignment structure shown in FIG. 2, is disposed pairwise in a frame structure 200 located in a designated connector position at a side edge of the PIC chip. As each of the pair of aligners 100 is disposed in the frame structure 200, it has a support bar 130 positioned on a surface 115 near the side edge of the PIC chip to keep the aligner 100 in a state matching with that of the PIC chip. At the same time, a shelf 13, which is extended out from the side edge of the PIC chip, is fully received in the cutout space (denoted as 102 in FIG. 2) provided by one of the pair of aligners 100. The aligner 100 is in a proper position relative to the frame structure 200, a position designed for guiding a body of FAU connector 14 down to the shelf 13. The shelf 13 comprises a pair of V-grooves 135 (only one is visible in this perspective view) on surfaces along two sides of the shelf. In an embodiment, the shelf 13 is configured to be used as a support for a body of FAU connector 14 loaded from top (or plugged-in) as illustrated in neighboring one of the pair of aligners 100. The V-grooves 135 in the shelf 13 are configured to receive alignment rods (denoted as 145 in FIG. 3) on the body of FAU connector 14 to ensure the body of FAU connector 14 being plugged in an alignment position such that the lens 141 of the FAU connector 14 optically aligns with the lens 111 at the side edge of the PIC chip.

In an embodiment, the aligner 100 is placed in the frame structure 200 in the proper position such that the shelf 13 is fully received into the cutout space 102 (see FIG. 2) with an all-around clearance gap without direct touching each other. This is to ensure no affection to sensitive optical alignments involving the shelf 13 from thermal expansion/contraction of the aligner 100. Optionally, the aligner 100 may be glued to a bottom surface of the frame structure 200 to secure this proper position, while the frame structure 200 is configured to attach in a floating state with the strong lid structure 12 of the CPO-PIC assembly. In another embodiment, once the optical alignment is achieved after the body of FAU connector 14 being loaded onto the shelf 13, the bottom of the shelf can be glued to a bottom surface of the frame structure 200 by dispensing epoxy from the bottom side of the frame structure 200.

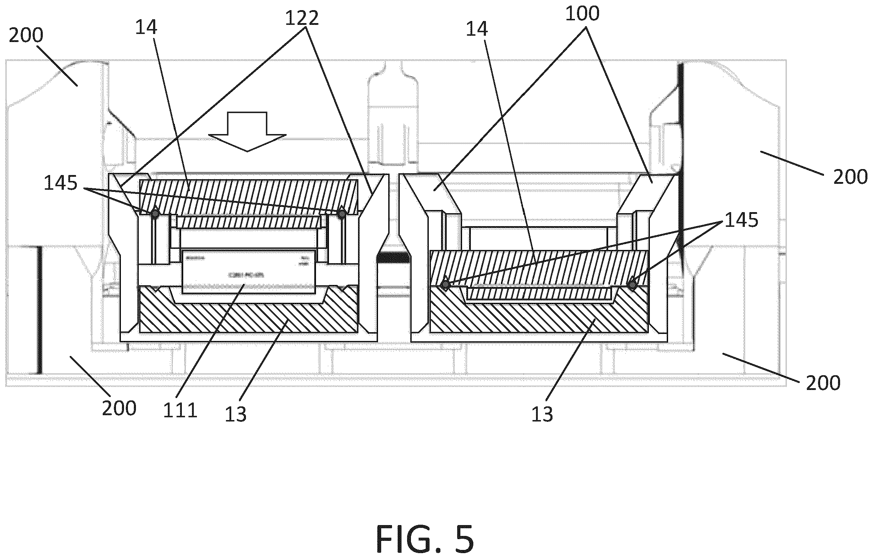

FIG. 5 is a cross-sectional view showing a configuration with the body of FAU connector being guided via an aligner down to a shelf and a next configuration with the body of the FAU connector in an alignment position with the alignment rods matched to V-grooves in a shelf in a next aligner according to an embodiment of the subject technology. In an embodiment, FIG. 5 illustrate a method for loading (may be manually by an operator) a body of FAU connector 14 into the semi-confined open space (denoted as 101 in FIG. 2) provided by the aligner 100. In particular, the semi-confined open space 101 is the space between two side sections of the aligner 100 and above the shelf 13. As shown in the left part of FIG. 5, a body of FAU connector 14 is lowered from top, as indicated by the arrow. The aligner 100 is configured to have two sloped facets 122 extended from outer wall downward to inner wall of respective two side sections (see FIG. 2). This sloped configuration provides a guide or funnel for loading the body of FAU connector 14 down until it reaches the shelf 13. The spacing between the inner walls, denoted as d1, is bigger by a small amount than the width of the body of FAU connector 14. As shown in the right side of FIG. 5, the two alignment rods 145 at the bottom of the body of FAU connector 14 can easily find their positions in the V-grooves (denoted as 135 in FIG. 4) formed in top surfaces of the shelf 13 with minor manual adjustment. In an embodiment, as the shelf 13 and associated V-grooves as an alignment feature has been pre-aligned for particular lens 111 of optical IOs at the side edge of PIC chip, the body of FAU connector 14 will be set into an alignment position once the two alignment rods 145 matched with the associated V-grooves in the shelf 13. In other words, the lens of the FAU connector in the alignment position shall be aligned with the lens 111 of the PIC chip. As shown in FIG. 5, the two aligners 100 are placed in two neighboring positions within one frame structure 200.

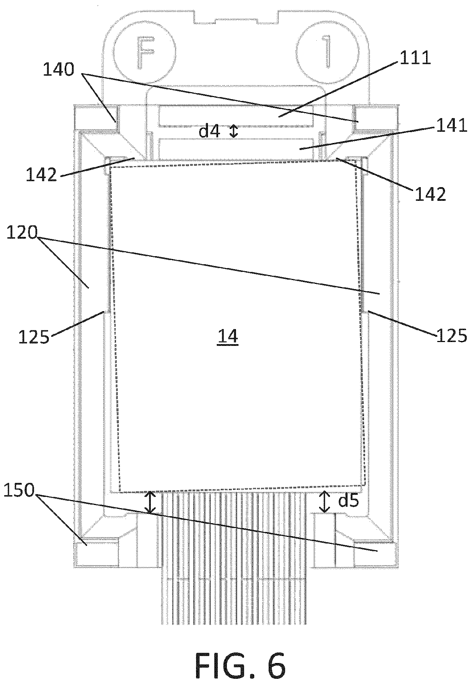

FIG. 6 is a top view showing a body of FAU connector loaded in the semi-confined open space with hard stops at front and rear, a rotational freedom, and translational freedom for facilitating realization of alignment with the shelf according to an embodiment of the subject technology. Similar to the configuration shown at the right side of FIG. 5, a body of FAU connector 14 has been loaded from top down to the shelf (not visible in this figure). Ideally, it will sit on the shelf in its alignment position as the alignment rods are fitted into the V-grooves (see FIG. 5). Practically, it may need some fine adjustments by moving laterally within the semi-confined open space between two inner side walls of the pair of side sections of the aligner 100. The aligner 100 is configured to have the semi-confined open space with the first distance d1 slightly bigger than the width of the body of FAU connector so that it can have freedom to move in left/right direction in this top view angle. In the length direction, the aligner 100 includes two first L-shaped end-sections 140 to provide hard stops 142 to prevent the body of FAU connector 14 to move forward up to a certain point where the lens 141 of the FAU connector is fourth distance d4 away from the lens 111 of the PIC chip, which may be a controlled ideal separation for achieving excellent optical coupling between the two lenses.

In another embodiment, the length of the semi-confined open space has at least a fifth distance d5 bigger than the length of the body of FAU connector 14. The backend of the body of FAU connector is a gap of the fifth distance d5 away from the second L-shaped end-sections 150 of the aligner 100. The second L-shaped end-sections 150 also serve as a hard stop for the body of FAU connector 14 at the backend of the aligner 100. This gap of the fifth distance d5 allows the body of FAU connector 14 to have sufficient translational freedom inside the semi-confined open space to seek its ideal alignment- position. In yet another embodiment, each of the two side sections 120 includes an edge step vertically oriented relative to body of FAU connector 14 in horizontal direction. The edge steps are located proximately at central regions of the two side sections, enlarging the spacing between two inner side walls from the first distance d1 to a second distance d2 from the central regions backward to the second L-shaped end-sections 150. This provides a small amount of rotational freedom to the body of FAU connector 14 inside the semi-confined open space, as schematically illustrated by the body in dashed line in FIG. 6. These translational or rotation freedom introduced by the designed clearances between the loaded FAU connector body and inner side walls of the aligner facilitate the alignment and avoid hard fight during the fine adjustment process.

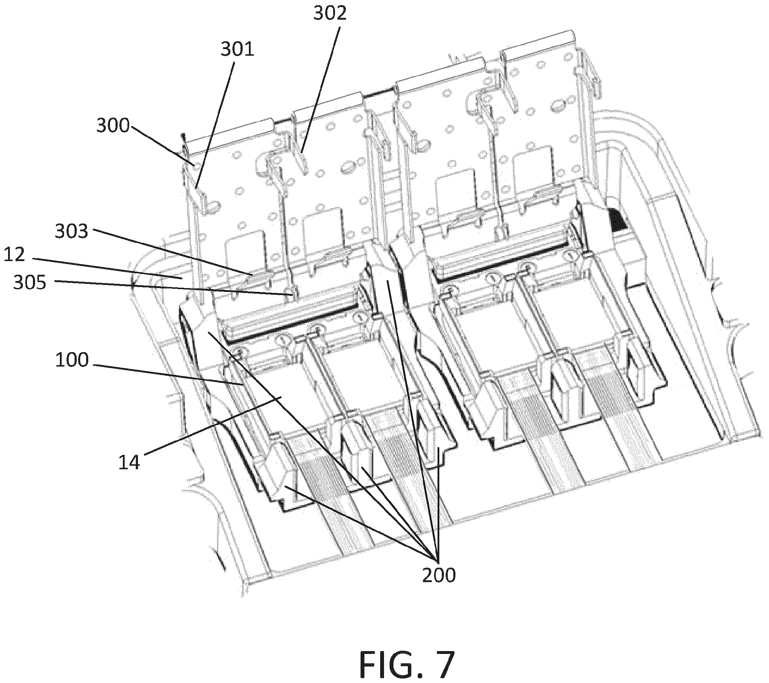

In yet another embodiment, the alignment structure of the subject technology, referred as the aligner 100, is placed into a designated position defined by a frame 200 based on the location of the optical IOs at the side edge of the PIC chip. In a specific embodiment, as shown in FIG. 7, for every one frame structure 200, it provides two positions for placing two aligners 100 one next to another. Each of the two positions are directly associated with the location of the lens of the PIC chip at the side edge. A shelf with corresponding alignment feature associated with this lens is attached to underside of the package structure of the PIC chip and extended out of the side edge. The frame 200 is attached to the lid structure 12 designed for packaging the CPO-PIC assembly (see FIG. 1) along the side edge of the PIC chip so that two shelve are included in the frame 200. Each of the two aligners 100 then is placed to corresponding one of the two positions to receive the corresponding one of the two shelve. Each aligner 100 further provides a guide for loading one FAU connector 14 (as shown in FIG. 6) onto the shelf to achieve alignment between a lens of the FAU connector and corresponding lens of the PIC chip for forming one optical IO of the CPO-PIC assembly.

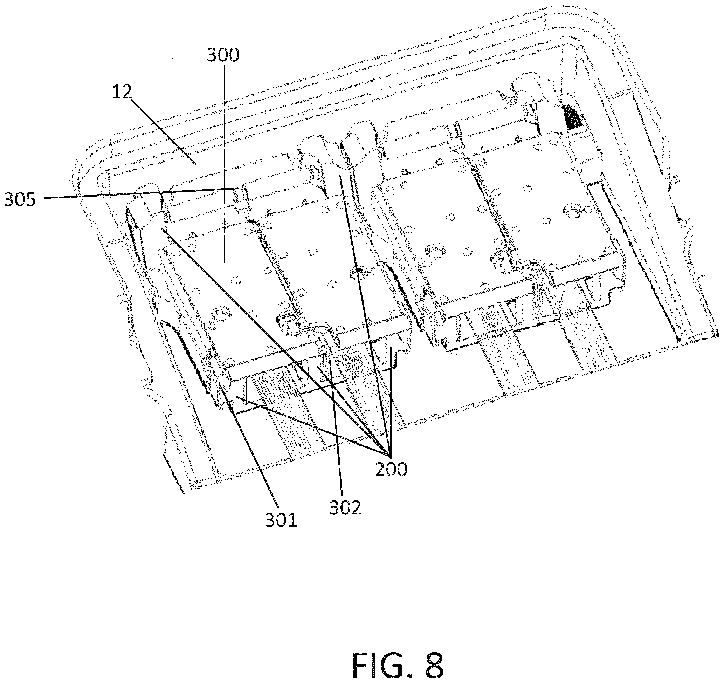

In still another embodiment, FIG. 7 also shows that the formation of optical connector of the CPO-PIC assembly involves another feature piece part, a clamshell lid 300 for covering each aligner 100 in the designated position with a body of FAU connector 14 being loaded. As shown in FIG. 7, the clamshell lid 300 is coupled to the frame 200 via one pivotal pin 305, which allows the clamshell lid 300 to open to an upright position or close to a position over the aligner 100 and the body of FAU connector loaded inside the semi-confined open space. FIG. 7 shows an opened position of the clamshell lid 300, revealing a piece plate 303 connected in an angle tilted downward (but <90°) to the bottom surface of the clamshell lid 300. Further, the clamshell lid 300 is configured to have two additional piece plates 301 and 302 connected in 90° to two side edges of the clamshell lid 300. One piece 302 is straight in shape for sliding down along a straight side wall of a central pillar on the frame 200 when the clamshell lid 300 is turned to the closed state. Another piece plate 301 has a hooked end for latching with a stepped pillar on the frame 200 when the clamshell lid 300 is in the closed state. This is shown in FIG. 8 when the clamshell lid 300 is turned via the pivotal pin 305 from the open position to the closed position to cover the aligner 100 and the angled piece plate 303 can be configured to press on top of the body of FAU connector 14 with a spring force to secure the alignment position of the FAU connector aligned with the lens of the PIC chip.

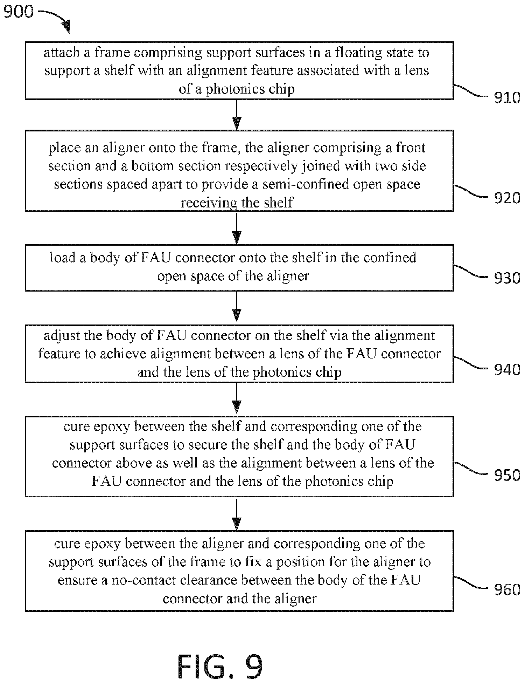

In an alternative aspect, the subject technology provides a method for supporting alignment for optical inputs/outputs (IOs) of a co-packaged optics - photonic integrated circuit (CPO-PIC) assembly. FIG. 9 shows a flow chart illustrating method 900 for aligning a fiber array unit (FAU) connector with a photonic integrated circuit (PIC) in an embodiment of the subject technology. The method 900 includes a step 910 for attaching a frame comprising support surfaces in a floating state configured to support a shelf with an alignment feature associated with a lens of a photonics chip attaching a frame to a package structure of a PIC chip. The PIC chip, e.g., silicon-based photonic integrated optical transceiver co-packaged with electrical switch module, needs to have optical IOs. FAU connectors are used to form the optical IOs by coupling lenses of FAU connectors with lenses at side edges of the PIC chip. In a specific embodiment, the frame is attached to a lid structure (denoted as 12 in FIG. 1) of the CPO-PIC assembly. The lid structure is a rigid and strong fixture as a top part of packaging structure the CPO-PIC assembly whose bottom part is configured to attach the shelf. Thus, the frame provides support surfaces to allow forces (weight of the body of FAU connector and other forces applied by operator during the loading of the FAU connector) to be effectively transmitted through the shelf to the frame and further to the lid structure. In an embodiment, the frame is attached to the lid structure with minimum physical contacts. There are no direct contact below the support surfaces with any part of packaging structure of the CPO-PIC assembly. Thus, it allows the optical structures to be supported in a floating state with minimized impact over temperatures. In another embodiment, one of the support surfaces provided by the frame is configured to be bonded by epoxy to a pair of shelfs each with an alignment feature respectively associated with two lenses at one side edge of the PIC chip.

FIG. 9 also shows that method 900 includes a step 920 for placing an aligner onto the frame. The aligner, as illustrated in FIG. 2, is made of a front section and a bottom section respectively joined with two side sections spaced apart by a first distance to provide a semi-confined open space. The bottom section and the front section are configured to further expand the semi-confined open space to receive the shelf of the PIC chip such that the front section of the aligner is positioned on a surface of the PIC chip and the bottom section is supported by one of the support surfaces of the frame. In an embodiment, the bottom section of the aligner is configured to be bonded by epoxy on the one of support surfaces of the frame. In an embodiment, the aligner is placed into the frame manually by an operator or assembling worker into a position guided by the frame. At this position, the aligner can, upon its geometrical shapes, to serve a function for facilitating a placement of a body of FAU connector and allow the lens of FAU connector to align with the lens at the side edge of the PIC chip. This function and its benefit have been presented in the previous paragraphs and illustrated from FIG. 1 through FIG. 8. At the same time, this position ideally would maintain a no-contact clearance with the shelf to avoid direct impact to the optical alignment between the lens of FAU connector and the lens of the PIC chip due to thermal expansion or contraction of the packaging materials. Stress measurements indicate that there is almost no stress shown in the frame, aligner, and shelf subjected to temperature changes from 150 °C cooled to 80 °C. In some embodiments, the step 920 includes placing a pair of aligners having a same structure into each frame in a side-by-side configuration. Both aligners are to be bonded by epoxy onto one of supporting surfaces of the frame to secure respective positions with a no-contact clearance gap from a respective pair of shelve.

Referring to FIG. 9, method 900 also includes a step 930 for loading a body of FAU connector onto the shelf in the corresponding semi-confined open space of the aligner. The side section of the aligner serves as a guide to let the body of FAU connector to be lowered from above into the semi-confined open space until it sits on the shelf that was received via the cutout space when the aligner is placed into the frame. In an embodiment, the two side sections each comprising a narrow top ridge connected to inner wall via a sloped facet, forming a funnel like structure for loading the body of FAU connector from top. Especially, this provides a funnel effect to help the operator to hand-pick the body and lower it down to the shelf.

Referring to FIG. 9 again, method 900 includes a step 940 for adjusting the body of FAU connector to an alignment position on the shelf via the alignment feature to achieve optical alignment between a lens of the FAU connector and a lens of the PIC chip. In an embodiment, the semi-confined open space is configured to have a width, i.e., a first distance d1 separated by two inner walls of the two side sections (see FIG. 2), larger than body width of FAU connector as shown in FIG. 6. Additionally, each of the two inner walls has an edge step to make the rear part of the two inner walls be spaced further apart by a second distance, providing a rotational freedom horizontally. This rotational freedom allows adjusting of the body of FAU connector more easily to find corresponding alignment position via the alignment feature in the shelf. Furthermore, the semi-confined open space also is designed to have a length bigger than the body length to provide sufficient translational freedom for facilitating the alignment. In an embodiment, the length of the semi-confined open space is determined by first L-shaped end-sections respectively connecting the two side sections to the front section of the aligner and second L-shaped end-sections respectively connecting the two side sections at backend of the aligner. The first L-shaped end-sections also provide hard stops for preventing the lens of FAU connector to touch the lens at the side edge of the PIC hip, instead, providing a gap distance that may be predetermined to be ideal for enhancing optical coupling between the two lenses.

In an embodiment, method 900 further includes a step 950 for curing the epoxy between each shelf and the corresponding one of the support surfaces to secure the shelf with the body of the FAU connector above at the alignment position. As in the step 910, the shelf is supported by one of support surfaces provided by the frame when the frame is attached to the package structure of the PIC chip. Yet the support is non-bonded. In an embodiment, the support surfaces provided by the frame includes multiple through-holes therein and no other solid structure exists below the bottom side of the support surfaces as the frame is attached in a floating state to the package structure of the PIC chip. Using these through-holes, epoxy can be dispensed into the interface, without curing, between the shelf and the support surfaces. Only when the loading of the FAU connector and the alignment is reached, step 950 is executed to bond the shelf to the support surfaces to secure the alignment between the lens of FAU connector and the lens of the PIC chip.

In another embodiment, method 900 further includes a step 960 for curing the epoxy between each aligner and the corresponding one of the support surfaces of the frame to fix a position for the aligner to ensure a no-contact clearance between the body of the FAU connector and the aligner. As the aligner is placed in the frame in the step 920, the aligner provides a semi-confined open space to receive the shelf with a non-contact clearance gap and ready to allow a body of FAU connector to be loaded onto the shelf while the bottom section of the aligner is supported by one of support surfaces of the frame. Yet the support is non-bonded while the aligner serves its function for guiding the body of FAU connector into the semi-confined open space and assisting it to find its alignment position on the shelf. Once this alignment position is reached, the step 950 may be executed to secure the shelf position on the support surface of the frame by curing epoxy. Then, step 960 can be executed to cure the epoxy to secure the support position of the aligner on the support surface of the frame. This position would keep the non-contact clearance gap between the aligner and the shelf as well as the body of FAU connector seated above the shelf. Again, the epoxy can be pre-dispensed through the multiple through-holes in the bottom section into the interface between the bottom of the aligner and the support surface of the frame.

In another embodiment, the frame can be associated with a clamshell lid. Method 900 may include a step of turning the clamshell lid from an opened state to a closed state via a pivot pin coupled to the frame. Optionally, there are two clamshell lids coupled to the frame via a single pivot pin. In steps 920, 930 and 940, the clamshell lid is in the opened state to allow placing the aligner, loading the body of FAU connector, and adjusting the body of FAU connector to reach the alignment position. Method 900 may include a step for closing the clamshell lid such it can apply a force on top of the body of the FAU connector to hold it to the alignment position by latching the clamshell lid to the frame.

While the above is a full description of the specific embodiments, various modifications, alternative constructions and equivalents may be used. Therefore, the above description and illustrations should not be taken as limiting the scope of the present invention which is defined by the appended claims.

## Claims

1. An alignment structure for optical components comprising:
an aligner comprising multiple sections joined together to provide a semi-confined open space configured to allow a body of a first optical component to be loaded into an alignment position to align with a second optical component, the multiple sections comprising:
a bottom section having a front edge facing a part of the semi-confined open space for receiving a shelf extended out of the second optical component;
a pair of side sections respectively joined with the bottom section and separated by a first width of the semi-confined open space to allow the body of the first optical component to be lowered from top; and
a front section joined with the pair of side sections, the front section being configured to be a support bar positioned on a surface of the second optical component while the shelf and a part of the second optical component are inserted under the support bar in the semi-confined open space and the shelf is used to support the body of the first optical component in the alignment position.

2. The structure of claim 1, wherein the pair of side sections comprise a top ridge near an outer wall of each side section and a sloped facet down from the top ridge to an inner wall of each side section, wherein the two inner walls of the pair of side sections are separated by the first width.

3. The structure of claim 2, wherein the sloped facet on each side section is configured to guide the body of the first optical component into the semi-confined open space until it sits onto the shelf, wherein the body of the first optical component has a width smaller than the first width.

4. The structure of any preceding claim, wherein each side section comprises an edge step in vertical direction relative to the bottom section, the edge step being located at a central region of the inner wall to increase the first width for a section of the semi-confined open space from the central region backward to allow a small amount of rotational freedom horizontally within the semi-confined open space for the body of the first optical component on the shelf to settle at the alignment position.

5. The structure of any preceding claim, wherein the pair of side sections comprises two first L-shaped end-sections joined with the front section, the two first L-shaped end-sections providing a stop for the body of the first optical component to keep a clearance gap from the first optical component in the alignment position to the second optical component.

6. The structure of any preceding claim, wherein the pair of side sections comprises two second L-shaped end-sections separated by a second width narrower than the first width yet sufficient to allow a ribbon fiber to pass out of the semi-confined open space from the body of the first optical component, and provide an extra amount of translational freedom horizontally within the semi-confined open space for the body of the first optical component on the shelf to align with the second optical component.

7. The structure of any preceding claim, wherein the aligner is configured to keep itself a clearance gap from both the body of the first optical component and the shelf when the body of the first optical component is in the alignment position on the shelf in the semi-confined open space.

8. The structure of any preceding claim, wherein the aligner is a single piece part for aligning a fiber array unit (FAU) connector with a lens at a side edge of a photonic integrated circuit (PIC) chip, the PIC chip having a package bottom from which the shelf is extended out.

9. The structure of claim 8, further comprising a support frame to provide respective surfaces for the aligner and the shelf to bond to and a clamshell lid to cover and hold the body of the FAU connector seating in the alignment position on the shelf by latching with the support frame, the support frame being in a floating state attached to a package structure of the PIC chip.

10. An apparatus for aligning a fiber array unit (FAU) connector with a photonic integrated circuit (PIC) comprising:
an aligner having a front section, a rear section, and a bottom section respectively joined with two side sections spaced apart by a first distance, the front section and the bottom section being configured to expand a semi-confined open space between the two side sections for receiving a shelf extended out beyond a lens at a side edge of a PIC chip, the shelf having an alignment feature associated with the lens, the front section being configured as a support bar positioned on a surface of the PIC chip, the semi-confined open space between the two side sections allowing a body of the FAU connector to be loaded down from top to sit on the shelf in the semi-confined open space and be aligned with the lens through the alignment feature.

11. The apparatus of claim 10, wherein each of the two side sections comprises an inner side facing the semi-confined open space, an outer side opposite to the inner side, a narrow top ridge near the outer side and a sloped facet down from the top ridge to the inner side for guiding the body of the FAU connector down onto the shelf in the semi-confined open space between the two inner sides of the two side sections, the body of the FAU connector having a width equal to or smaller than the first distance.

12. The apparatus of claim 11, wherein the inner side comprises an edge step in vertical direction located at a central region of the side section, the edge step increasing the first distance to a second distance for a partial section of the semi-confined open space from the central region to the rear section to allow a small amount of rotational freedom horizontally within the semi-confined open space for the body of the FAU connector on the shelf to align with the lens at the side edge of the PIC chip.

13. The apparatus of any preceding claim 10 to 12, wherein the two side sections comprise two first L-shaped end-sections joined with the front section, the two first L-shaped end-sections providing hard stops for the body of the FAU connector to control a distance between a lens of the FAU connector and the lens at the side edge of the PIC chip.

14. The apparatus of any preceding claim 10 to 13, wherein the two side sections comprise two second L-shaped end-sections spaced apart by a third distance smaller than the first distance yet sufficient for passing a ribbon fiber of the FAU connector loaded on the shelf in the semi-confined open space.

15. A method for aligning a fiber array unit (FAU) connector with a photonic integrated circuit (PIC) comprising:
attaching a frame to a package structure of a PIC chip to provide support surfaces in a floating state, one of the support surfaces being configured to be bonded by epoxy to a pair of shelve each with an alignment feature respectively associated two lenses of the PIC chip;
placing a pair of aligners onto the frame, each aligner comprising a front section and a bottom section respectively joined with two side sections spaced apart by a first distance to provide a semi-confined open space configured to receive one of the pair of shelve as the front section positioned on a top surface of the PIC chip, one of the support surfaces of the frame being configured to be bonded by epoxy to the bottom section of each aligner;
loading a pair of bodies of two FAU connectors respectively onto the pair of shelve in the semi-confined open spaces of the pair of aligners, each body being provided with a small amount of rotational freedom horizontally in the corresponding semi-confined open space and translational freedom along a direction in parallel with the two side sections;
adjusting each body of FAU connector to an alignment position on the corresponding shelf via the alignment feature to achieve optical alignment between a lens of the FAU connector and one of the two lenses of the PIC chip;
curing the epoxy between each shelf and the corresponding one of the support surfaces to secure the shelf with the body of the FAU connector at the alignment position; and
curing the epoxy between each aligner and the corresponding one of the support surfaces of the frame to fix a position for the aligner to ensure a no-contact clearance between the body of the FAU connector and the aligner.
